# EUROPEAN PATENT SPECIFICATION

(11) **EP 3 695 984 B1**
(45) Date of publication and mention of the grant of the patent: **15.03.2023**
(21) Application number: 18866484.1
(22) Date of filing: 30.08.2018
(51) Int. Cl.: B60C 11/00, B60C 11/03

(54) **MOTORCYCLE TIRE**
MOTORRADREIFEN
PNEU DE MOTOCYCLETTE

(30) Priority: 11.10.2017 JP 2017197973
(43) Date of publication of application: 19.08.2020
(73) Proprietor: Bridgestone Corporation, Tokyo 104-8340 (JP)
(72) Inventor: NAKAMURA, Takamitsu, Tokyo 104-8340 (JP); TOKITOH, Yasufumi, Tokyo 104-8340 (JP); SHIMAMURA, Naoki, Tokyo 104-8340 (JP)
(74) Representative: Marks & Clerk LLP
(86) International application number: PCT/JP2018/032215
(87) International publication number: WO 2019/073715

(56) References cited:
- EP-A1- 0 822 103
- WO-A1-2011/068173
- WO-A1-2013/003915
- JP-A- 2001 010 310
- JP-A- 2001 071 711
- JP-A- 2007 331 657
- JP-A- 2012 513 930
- JP-A- 2013 519 563
- JP-A- 2014 148 281
- JP-A- 2016 068 906
- US-A1- 2006 185 776
- US-S- D 419 930

## Description

### TECHNICAL FIELD

The present invention relates to a motorcycle tire (hereinafter, also simply referred to as a "tire"), and more particularly, to a motorcycle tire including an improved tread portion, and particularly to a motorcycle front tire.

### BACKGROUND ART

A motorcycle tire has a shape with a round cross-section in which the tire crown has a smaller radius of curvature than those for four-wheeled vehicle tires, due to characteristics of a two-wheeled vehicle that turns while leaning the body unlike four-wheeled vehicles such as passenger cars, trucks, or buses. In other words, in a motorcycle pneumatic tire, when a motorcycle is traveling straight, the center of a tread mainly contacts the ground, and when turning, a shoulder portion of the tread contacts the ground.

In view of such characteristics of motorcycle tires, examples of a method for ensuring grip performance of a motorcycle tire when turning include a technique of arranging a lowhardness rubber compound on a shoulder portion of a tread used during turning. On the other hand, in order to improve the drainage of a motorcycle tire, it is advantageous to provide a lateral groove extending in the tire width direction across the tire equator on an entire tread grounding portion, and further provide a plurality of other lateral grooves to have a structure in which water is discharged from a tread end (see, for example, Patent Document 1). Attention is drawn to the disclosures of US D 419 930 S, EP0822103A1 and US2006/185776A1.

### RELATED ART DOCUMENT

### PATENT DOCUMENT

Patent Document 1 JP2013-163446 A(Claims and the like)

### SUMMARY OF THE INVENTION

### PROBLEMS TO BE SOLVED BY THE INVENTION

In order to improve the grip performance of a motorcycle tire when turning on a wet road surface such as when it is raining, it is conceivable to incorporate both of the above-described two techniques. However, in this case, there is a problem that the rigidity of a shoulder portion of the tread is reduced, the rigidity in the tire straight traveling direction at the time of turning is not sufficiently secured, and the steering stability is deteriorated.

Accordingly, an object of the present invention is to provide a motorcycle tire that maintains the rigidity during turning and ensures favorable steering stability while further improving the wet grip performance during turning.

### MEANS FOR SOLVING THE PROBLEMS

As a result of intensive studies, the present inventors have found that the above-described problems can be solved by defining arrangement conditions of tread rubbers and grooves in a predetermined manner, thereby completing the present invention.

Specifically, the present invention provides a motorcycle tire including a directional pattern in which a rotation direction when mounted on a vehicle is specified on a tire grounding portion, wherein
a tread portion forming the tire grounding portion is composed of a central rubber arranged across a tire equator and a both-side rubber arranged outside the central rubber in a tire width direction and having a lower 300% modulus at 100°C than the central rubber, and a boundary between the central rubber and the both-side rubber is in a range of from 1/2 to 3/4 of a half width of a peripheral length from the tire equator,
on the tire grounding portion, a first groove that includes a bent portion and extends across the tire equator, and whose both ends in the tire width direction are open to tread ends, a second groove that includes a bent portion and whose both ends in the tire width direction terminated in one side surface in the tire width direction, and a third groove whose outer side end in the tire width direction opens to the tread end and whose inner side end in the tire width direction terminates on one side surface in the tire width direction are sequentially provided in a direction opposite to a tire rotation direction,
the first groove extends in the tire rotation direction in an inclined manner so as to be substantially line-symmetric in the tire width direction about the bent portion, and the bent portion of the first groove is in a range of from 1/8 to 3/8 of the half width of the peripheral length from the tire equator,
the bent portion of the second groove is in a range of from 1/4 to 1/2 of the half width of the peripheral length from the tire equator, the inner side end in the tire width direction of the second groove is in a range of from 1/16 to 3/16 of the half width of the peripheral length from the tire equator, and the outer side end in the tire width direction of the second groove is in a range of from 5/8 to 7/8 of the half width of the peripheral length from the tire equator,
the inner side end in the tire width direction of the third groove is in a range of from 1/2 to 5/8 of the half width of the peripheral length from the tire equator,
when two groove portions extending in an inclined manner so as to be line-symmetric in the tire width direction of the first groove are defined as a long groove portion extending across the tire equator and a short groove portion extending in one side surface in the tire width direction, and acute angles of angles formed by the long groove portion and the short groove portion with respect to the tire circumferential direction are defined as *θ1* and *θ2*, respectively, when, with the bent portion interposed, a groove portion on the outer side in the tire width direction of the second groove is defined as an outer side groove portion and a groove portion on the inner side in the tire width direction of the second groove is defined as an inner side groove portion, and acute angles of angles formed by the outer side groove portion and the inner side groove portion with respect to the tire circumferential direction are defined as *θ3* and *θ4*, respectively, and when the acute angle of the angles formed by the third groove with respect to the tire circumferential direction is defined as *θ5*, *θ1* ≈ *θ2* ≈ *θ3* ≈ *θ5*, and *θ1 > θ4* are satisfied, and,
distances *a*, *b,* and c between the grooves in the tire circumferential direction measured between the open ends of the tire grounding portions of the first groove and the second groove, the second groove and the third groove, and the third groove and the first groove satisfy *a* ≈ *b* ≈ c.

In the tire of the present invention, it is preferable that the angle *θ1* of the long groove portion of the first groove is in a range of from 45° to 55°, and the angle *θ2* of the short groove portion of the first groove is in a range of from 45° to 55°. In the tire of the present invention, it is preferable that the angle *θ3* of the outer side groove portion of the second groove is in a range of from 45° to 55°, and the angle *θ4* of the inner side groove portion of the second groove is in a range of from 15° to 25°. Further, in the tire of the present invention, it is preferable that the angle *θ5* of the third groove is in a range of from 45° to 55°, and it is also preferable that a shallow groove is provided as claimed in claim 5.

Here, in the present invention, the half width P/2 of the peripheral length means 1/2 of a tire width direction distance P between both tread ends TEs measured along the tread surface in an unloaded state with a tire mounted on an applicable rim and filled to a specified internal pressure. Herein, the "applicable rim" means a rim specified by an industrial standard valid in a region where a tire is produced and used, and "specified internal pressure" means air pressure corresponding to the maximum load capacity in an application size described in this industrial standard. The industrial standards are JATMA YEAR BOOK of Japan Automobile Tire Association (JATMA) in Japan, STANDARDS MANUAL of The European Tyre and Rim Technical Organisation (ETRTO) in Europe, YEAR BOOK of The Tire and Rim Association, Inc. (TRA) in the United States, and the like.

### EFFECTS OF THE INVENTION

According to the present invention, a motorcycle tire that maintains the rigidity during turning and ensures favorable steering stability while further improving the wet grip performance during turning can be provided.

### BRIEF DESCRIPTION OF THE DRAWINGS

FIG. 1 is a sectional view in the width direction showing an example of a motorcycle tire according to the present invention.
FIG. 2 is a partial development view showing a tread pattern of an example of a motorcycle tire of the present invention.

### MODE FOR CARRYING OUT THE INVENTION

Hereinafter, embodiments of the present invention will be described in detail with reference to the drawings.

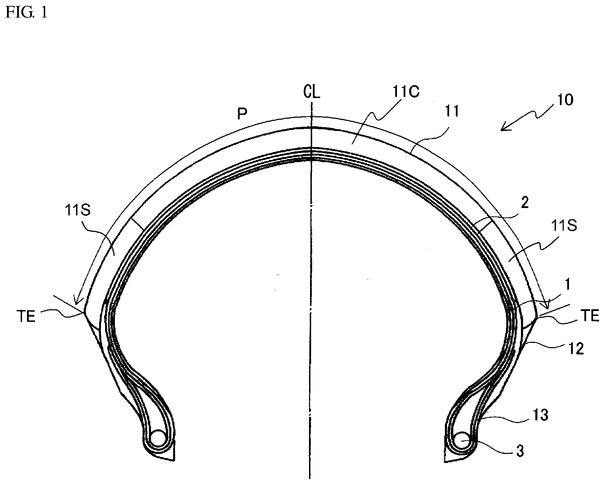

FIG. 1 is a sectional view of the width direction showing an example of the motorcycle tire according to the present invention. The illustrated tire 10 of the present invention includes a tread portion 11 forming a grounding portion, a pair of sidewall portions 12 extending inward in the tire radial direction continuously from both sides of the tread portion, and a pair of bead portions 13 that are each continuous with the inner peripheral side of each of the sidewall portions 12. The tread portion 11, the sidewall portion 12, and the bead portion 13 are reinforced by at least one, for example, one or two carcass plies 1 toroidally extending between a pair of the bead portions 13, and at least one, for example, one or two belt layers 2 are arranged outside the carcass ply 1 in the tire radial direction.

As shown in FIG. 1, in the motorcycle tire 10 of the present invention, the tread portion 11 forming the tire grounding portion includes: a central rubber 11C arranged across a tire equator CL; and a both-side rubber 11S arranged on an outer side in the tire width direction of the central rubber 11C and having a lower modulus than the central rubber 11C. Specifically, in the motorcycle tire 10 of the present invention, since the center side of the tire grounding portion is made of the central rubber 11C having a relatively high modulus, and the shoulder side is made of the both-side rubber 11S having a relatively low modulus, both the wear resistance during straight traveling and the grip performance during turning can be achieved.

In the present invention, a boundary between the central rubber 11C and the both-side rubber 11S is in a range of from 1/2 to 3/4 of the half width P/2 of the peripheral length from the tire equator CL, and particularly in a range of from 9/16 to 11/16. When the area in which the central rubber 11C is provided is too wide, the grip performance during turning is not sufficiently obtained, and when the area in which the both-side rubbers 11S are provided is too wide, the wear resistance deteriorates.

Here, in the present invention, regarding the central rubber 11C and the both-side rubber 115, the modulus is not specifically limited as long as the central rubber 11C has a relatively high modulus and the both-side rubber 11S has a relatively low modulus, and the modulus can be appropriately selected within a range usually used for a tread rubber of a tire. For example, regarding the specific modulus of the rubber composition constituting each rubber, using a 300% modulus at 100°C, the 300% modulus M₃₀₀(C) of the central rubber 11C is in a range of from 7 MPa to 13 MPa, and the 300% modulus M₃₀₀(S) of the both-side rubber 11S is in a range of from 6 MPa to 10 MPa, and M₃₀₀(C) > M₃₀₀(S) is satisfied. By setting the 300% modulus of the central rubber 11C to the above-described range, a favorable wear resistance can be obtained, and by setting the 300% modulus of the both-side rubber 11S to the above-described range, a favorable grip performance during turning can be obtained.

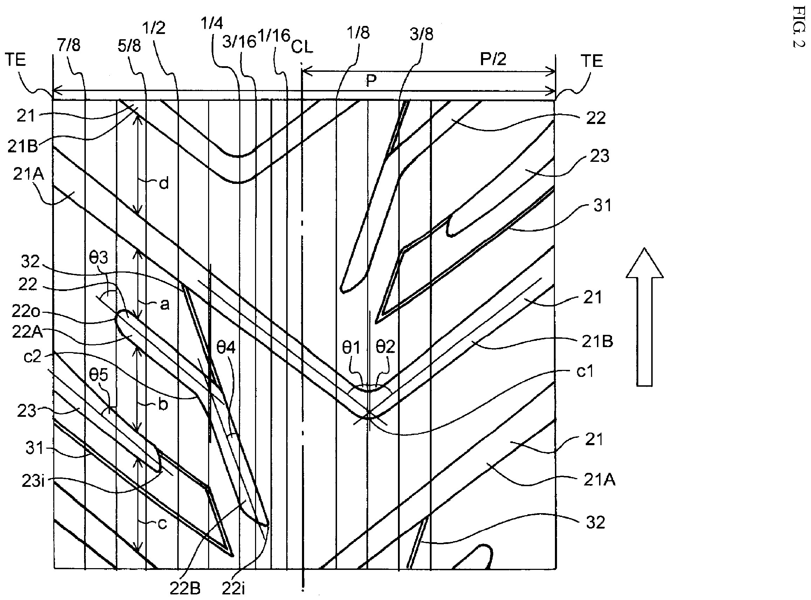

FIG. 2 is a partial development view showing an example of a tread pattern of a motorcycle tire of the present invention. As illustrated, the motorcycle tire of the present invention includes, on the tire grounding portion, a directional pattern specifying a rotation direction when the tire is mounted on a vehicle. The arrow in the figure indicates the rotation direction of the tire.

As illustrated, in the motorcycle tire of the present invention, on the tire grounding portion, a first groove 21 that extends across the tire equator CL and opens at both ends in the tire width direction at the tread ends TE, a second groove 22 whose both ends in the tire width direction terminate in one side surface in the tire width direction, and a third groove 23 whose outer side end in the tire width direction is open at the tread end TE and whose inner side end in the tire width direction terminates in one side surface in the tire width direction are sequentially included in a direction opposite to the tire rotation direction.

As illustrated, in the present invention, a groove group including the first groove 21, the second groove 22, and the third groove 23 as a set is substantially repeatedly arranged symmetrically with respect to the tire equator CL and shifted in the tire circumferential direction by 1/2 an arrangement pitch. Here, in the present invention, the arrangement pitch of a pattern means one unit of repetition of a pattern formed by a groove provided in a tire tread in the tire circumferential direction. The arrangement pitch of each groove in the present invention is not particularly limited, and may be, for example, about from 1/9 to 1/16 of the entire circumference of a tire.

The first groove 21 includes a bent portion c1, and extends in the tire rotation direction in an inclined manner so as to be substantially line-symmetric with respect to the tire width direction about the bent portion c1, and the both-end portion in the tire width direction of the first groove 21 is open at the tread end TE. The bent portion c1 of the first groove 21 is in a range of from 1/8 to 3/8 of the half width P/2 of the peripheral length from the tire equator CL. Here, in the present invention, when two groove portions of the first groove 21 that extend in such a manner to be line-symmetric in the tire width direction are defined as a long groove portion 21A extending across tire equator CL and a short groove portion 21B extending in one side surface in the tire width direction, the position of the bent portion c1 is defined as the position of the intersection of a straight line passing through the center of the groove width of the long groove 21A and a straight line passing through the center of the groove width of the short groove 21B.

In the present invention, since the first groove 21 extends across the tire equator CL and opens to the tread end TE on both sides in the tire width direction, a water film on a tire grounding portion can be efficiently drained outward in the tire width direction. Since the bent portion c1 of the first groove 21 is located at a position distant from the tire equator CL, the rigidity during straight traveling can be ensured.

The second groove 22 includes a bent portion c2 and extends in the tire rotation direction from the tire equator CL side to the tread end TE side without crossing the tire equator CL, and both ends 22i and 22o of the second groove in the tire width direction terminate in one side surface in the tire width direction. The bent portion c2 of the second groove 22 is in a range of from 1/4 to 1/2 of the half width P/2 of the peripheral length from the tire equator CL. Further, the inner side end 22i in the tire width direction of the second groove 22 is in a range of from 1/16 to 3/16 of the half width P/2 of the peripheral length from the tire equator CL, and the outer side end 22o in the tire width direction of the second groove 22 is in a range of from 5/8 to 7/8 of the half width P/2 of the peripheral length from the tire equator CL. Here, in the present invention, when a groove portion on the outer side in the tire width direction and a groove portion on the inner side in the tire width direction with the bent portion c2 therebetween of the second groove 22 are defined as an outer side groove portion 22A and an inner side groove portion 22B, respectively, the position of the bent portion c2 is defined as the position of the intersection of a straight line passing through the center of the groove width of the outer side groove portion 22A and a straight line passing through the center of the groove width of the inner side groove portion 22B.

In the present invention, by positioning the inner side end 22i of the second groove 22 in the tire width direction in the above-described range, the rigidity during straight traveling can be ensured, and by positioning the bent portion c2 in the above-described range, the rigidity during straight traveling can also be ensured since the bent portion c2 of the second groove 22 is prevented from overlapping with the bent portion c1 of the first groove 21 when viewed from the tire circumferential direction. Further, by positioning the outer side end 22o in the tire width direction in the above-described range, rigidity during turning can be ensured.

The third groove 23 extends in the tire rotation direction from the tire equator CL side to the tread end TE side without crossing the tire equator CL, and the outer side end in the tire width direction opens to the tread end TE, and an inner side end 23i in the tire width direction terminates on one side surface in the tire width direction. The inner side end 23i in the tire width direction of the third groove 23 is in a range of from 1/2 to 5/8 of the half width P/2 of the peripheral length from the tire equator CL.

In the present invention, by positioning the inner side end 23i of the third groove 23 in the tire width direction in the above-described range, the rigidity balance of the tread portion on the shoulder side can be improved, and the rigidity during turning can be ensured. When the third groove 23 is arranged in a region extending from the central rubber 11C to the both-side rubber 11S, an effect of reducing the rigidity of the arrangement region of the central rubber 11C can be obtained, which is preferable.

In the present invention, when acute angles formed by the long groove portion 21A and the short groove portion 21B of the first groove 21 with respect to the tire circumferential direction are defined as *θ1* and *θ2*, respectively, acute angles of the outer side groove portion 22A and the inner side groove portion 22B of the second groove 22 with respect to the tire circumferential direction are defined as *θ3* and *θ4*, respectively, and acute angle formed by the third groove 23 with respect to the tire circumferential direction is defined as *θ5*, these angles *θ1*, *θ2*, *θ3*, *θ4*, and *θ5* satisfy *θ1* ≈ *θ2* ≈ *θ3* ≈ *θ5*, and *θ1 > θ4*. Here, in the present invention, the angle formed by each groove portion or groove with respect to the tire circumferential direction is defined as the angle formed by a straight line passing through the center of the groove width of each groove portion or groove with respect to the tire circumferential direction.

In other words, in the present invention, the angle *θ1* formed by the long groove portion 21A of the first groove 21 with respect to the tire circumferential direction, the angle *θ3* formed by the outer side groove portion 22A of the second groove 22 with respect to the tire circumferential direction, the angle *θ5* formed by the third groove 23 with respect to the tire circumferential direction, and the angle *θ2* formed by the short groove portion 21B of the first groove 21 with respect to the tire circumferential direction are substantially the same. This means that the long groove portion 21A of the first groove 21, the outer side groove portion 22A of the second groove 22, the third groove 23, and the short groove portion 21B of the first groove 21 are arranged substantially in parallel. By making the long groove portion 21A of the first groove 21, the outer side groove portion 22A of the second groove 22, the third groove 23, and the short groove portion 21B of the first groove 21 substantially parallel to each other in such a manner, even when a plurality of grooves are arranged on the shoulder side where the low-modulus both-side rubber 11S is present, the rigidity is not compromised. By making the angle *θ4* formed by the inner side groove portion 22B of the second groove 22 with respect to the tire circumferential direction smaller than the angle *θ1* formed by the long groove portion 21A of the first groove 21 with respect to the tire circumferential direction, since the inner side groove portion 22B of the second groove 22 is on the center side, the rigidity during straight traveling can be ensured.

Here, that the angles *θ1*, *θ2*, *θ3*, and *θ5* are substantially the same means that a manufacturing error is included. For example, the angles are substantially the same within an error range of ±10%.

In the present invention, a distance *a* between the first groove 21 and the second groove 22, a distance *b* between the second groove 22 and the third groove 23, and a distance c between the third groove 23 and the first groove 21 in the tire circumferential direction measured between the open ends of the tire grounding portion satisfy *a* ≈ *b* ≈ c. By arranging the first groove 21, the second groove 22, and the third groove 23 at substantially equal intervals in such a manner, the rigidity during turning can be ensured. Here, the groove distance *a* between the first groove 21 and the second groove 22 substantially means the distance between the long groove portion 21A of the first groove 21 and the outer groove portion 22A of the second groove 22, the distance *b* between the second groove 22 and the third groove 23 substantially means the distance between the outer side groove portion 22A of the second groove 22 and the third groove 23, and the distance c between the third groove 23 and the first groove 21 substantially means the distance between the third groove 23 and the short groove portion 21B of the first groove 21. In the present invention, since each groove is arranged symmetrically with respect to the tire equator CL and shifted by 1/2 of the arrangement pitch, as illustrated, the long groove portion 21A of the first groove 21 and the other short groove portion 21B of the first groove 21 arranged symmetrically with each other are arranged adjacent to each other in the tire circumferential direction, and preferably, a distance *d* between the long groove portion 21Aand the short groove portion 21B also satisfies *a ≈ b* ≈ *c ≈ d.* As a result, the rigidity during turning in the tire circumferential direction is more uniformly ensured, which is preferable.

Here, the distances *a*, *b, c,* and *d,* can be measured, for example, at the same position in the tire width direction where the first groove 21, the second groove 22, and the third groove 23 are arranged in such a manner to overlap when viewed in the tire circumferential direction. The fact that the distances *a*, *b, c*, and *d* between the grooves are substantially the same means that a manufacturing error is included. For example, when the distance is within an error range of ± 20% on a mm basis, the distances are substantially the same.

As described above, in the present invention, by arranging the central rubber 11C and the both-side rubber 11S having a relatively low modulus on the tread portion under predetermined conditions and arranging the first groove 21, the second groove 22, and the third groove 23 under predetermined conditions, a motorcycle tire maintaining rigidity and wear resistance during straight traveling, ensuring favorable steering stability by maintaining rigidity during turning, and also having improved wet grip performance during turning was realized.

In the present invention, regarding the angle formed by each groove portion or groove with respect to the tire circumferential direction, specifically, the angle *θ1* of the long groove portion 21A of the first groove 21 is preferably 45° or more, and more preferably 47° or more, and preferably 55° or less, and more preferably 52° or less, and the angle *θ2* of the short groove portion 21B of the first groove 21 is preferably 45° or more, and more preferably 47° or more, and preferably 55° or less, and more preferably 52° or less. By setting the angle of each groove portion within the above-described range, water can be quickly drained in the tire width direction, which is preferable. When the above-described angle is less than 45°, it is difficult to drain water from the shoulder side, and when the angle more than 55°, it is difficult to take in water from the center side, and neither of which is preferable.

The angle *θ3* of the outer side groove portion 22Aof the second groove 22 is preferably 45° or more, and more preferably 47° or more, and preferably 55° or less, and more preferably 52° or less, and the angle θ4 of the inner groove portion 22B of the second groove 22 is 15° or more, and more preferably 18° or more, and preferably 25° or less, and more preferably 22° or less. By setting the angle of each groove portion within the above-described range, water can be quickly drained in the tire width direction, and the rigidity in the straight traveling direction and the rigidity in the lateral direction can be balanced, which is preferable.

Further, the angle *θ5* of the third groove 23 is preferably 45° or more, and more preferably 47° or more, and preferably 55° or less, and more preferably 52° or less. By setting the angle *θ5* of the third groove 23 within the above-described range, water can be quickly drained in the tire width direction, and the rigidity in the straight traveling direction and the rigidity in the lateral direction can be balanced, which is preferable.

In the present invention, the groove width of the first groove 21, the second groove 22, and the third groove 23 can be, for example, in a range of from 5 mm to 10 mm. Here, the groove width of each groove means a width on a tread surface measured in a direction perpendicular to the extending direction of the groove. As illustrated, the groove width of each groove may vary along the direction in which the groove extends. The groove depth of the first groove 21, the second groove 22, and the third groove 23 can be, for example, from 2 mm to 5 mm.

In the present invention, in addition to the first groove 21, the second groove 22, and the third groove 23, a shallow groove 31 can be arranged near the third groove 23. The shallow groove 31 is composed of a portion extending from the inner side end 23i in the tire width direction of the third groove 23 on the extension of the third groove 23, a portion extending in parallel with the third groove 23 on the side opposite to the tire rotation direction of the third groove 23, and a portion that connects these two portions, and is provided in such a manner to surround the third groove 23. Here, in the present invention, the shallow groove means a groove with a narrow groove width and a shallow groove depth, such that the maximum groove width is 0.1 mm or more, and preferably 0.5 mm or more, and 2.0 mm or less, and preferably 1.5 mm or less and the maximum groove depth is 0.1 mm or more, and preferably 0.2 mm or more, and 2.0 mm or less, and preferably 0.5 mm or less. By providing a shallow groove having a groove width and a groove depth in the above-described ranges on a tire grounding portion, drainage at an early stage of use of a tire can be improved, which is preferable. In the illustrated example, also near the second groove 22, a shallow groove 32 extending toward the long groove portion 21A of the first groove 21 on the extension of the inner side groove portion 22B of the second groove 22 is arranged.

In the tire of the present invention, it is important that arrangement conditions of a central rubber and a both-side rubber constituting a tread rubber, and arrangement conditions of a groove provided on a tire grounding portion were defined as described above, and as a result, a desired effect can be obtained. Other details of the tire structure and the materials used are not particularly limited, and may be configured as follows, for example.

The carcass ply 1 is composed of a layer in which a reinforcing cord is covered with rubber, and it is necessary to arrange at least one carcass ply, and two or more carcass plies may be arranged. For example, one to three carcass plies can be arranged. The angle of a reinforcing cord of the carcass ply 1 is from 0 to 25° with respect to the tire width direction in the case of a radial tire, and is from 40 to 70° with respect to the tire width direction in the case of a bias tire. As a reinforcing cord of the carcass ply, an organic fiber cord such as polyester such as aliphatic polyamide (nylon), aromatic polyamide (aramid), rayon, polyethylene naphthalate (PEN), or polyethylene terephthalate (PET) is usually used.

As the belt layer 2, one or more sheets of a so-called spiral belt formed by spirally winding a long rubber-coated cord in which one reinforcing cord is covered with rubber or a belt ply with a plurality of reinforcing cords covered with rubber and having a cord direction substantially equal to the tire circumferential direction, or approximately 0° (3° or less) with respect to the tire circumferential direction can be used. As the reinforcing cord of the belt layer 2, in addition to a steel cord, a cord of a material of an organic fiber such as aromatic polyamide (aramid, for example, Kevlar (trade name) manufactured by DuPont), polyethylene naphthalate (PEN), polyethylene terephthalate (PET), rayon, zylon (registered trademark) (polyparaphenylene benzobisoxazole (PBO) fiber), or aliphatic polyamide (nylon), or glass fiber, carbon fiber, or the like can be appropriately selected and used. From the viewpoint of ensuring wear life and high speed durability at high levels, a steel cord is preferably used.

For example, as illustrated, a bead core 3 is embedded in each of a pair of bead portions 13 of the motorcycle tire of the present invention, and the carcass ply 1 is locked around the bead core 3 from the inside of the tire to the outside. Although not illustrated, an end of the carcass ply 1 may be locked by being sandwiched between bead wires from both sides. An inner liner (not illustrated) is formed on the innermost layer of the tire of the present invention.

The tire of the present invention is applicable as both a front tire and a rear tire of a motorcycle, and is particularly suitable as a rear tire, and can be applied to any tire having a radial structure or a bias structure.

### EXAMPLES

Hereinafter, the present invention will be described in more detail with reference to Examples.

### (Example 1)

A motorcycle tire of Example 1 having a sectional structure as shown in FIG. 1 at a tire size of 110/80R19MC and having a tread pattern as shown in FIG. 2 on a tire grounding portion was prepared.

A tread portion forming a tire grounding portion was composed of a central rubber located across the tire equator and a both-side rubber located on the outer side in the tire width direction, and a boundary between the central rubber and the both-side rubber was located at a position 5/8 of the half width of the peripheral length from the tire equator. The 300% modulus M₃₀₀(C) at 100°C of a central rubber and the 300% modulus M₃₀₀(S) at 100°C of a both-side rubber satisfied M₃₀₀(C) > M₃₀₀(S).

The bent portion of the first groove was located at a position 1/4 of the half width of the peripheral length from the tire equator, the bent portion of the second groove was located at a position 3/8 of the half width of the peripheral length from the tire equator, the inner side end of the second groove in the tire width direction was located at a position 1/8 of the half width of the peripheral length from the tire equator, the outer side end of the second groove in the tire width direction was located at a position 3/4 of the half width of the peripheral length from the tire equator, and the inner side end in the tire width direction of the third groove was located at a position 9/16 of the half width of the peripheral length from the tire equator.

Further, the acute angles *θ1* and *θ2* of the angles formed by the long groove portion and the short groove portion of the first groove with respect to the tire circumferential direction were 50° and 50°, the acute angles *θ3* and *θ4* of the angles formed by the outer side groove portion and the inner side groove portion of the second groove with respect to the tire circumferential direction were 50° and 20°, and the acute angle *θ5* of the angle formed by the third groove with respect to the tire circumferential direction was 50°. A distance *a* between the first groove and the second groove, a distance *b* between the second groove and the third groove, and a distance c between the third groove and the first groove in the tire circumferential direction measured between the open ends of the tire grounding portion were 25 mm, 25 mm, and 25 mm, respectively.

### (Comparative Example 1)

A motorcycle tire of Comparative Example 1 was prepared in the same manner as in Example 1 except that the entire tread portion forming the tire grounding portion was formed of the above-described central rubber.

Each of the obtained test tires was mounted on a rim having a rim size of MT2.50 19 inches, mounted as a front tire of a 1,000 cc-motorcycle, and filled to an internal pressure of 220 kPa. As the rear tire, a commercially available tire having a tire size of 150/70R17MC was used.

### (Wet Grip Performance During Turning)

For each of the test tires, a professional rider ran an actual vehicle on a test course on a wet road surface, and evaluated the grip performance during turning by feeling. The results are shown by an index with Comparative Example 1 being 100. The larger the numerical value, the more excellent the wet grip performance, which is favorable.

### (Steering Stability During Turning)

For each of the test tires, a professional rider ran an actual vehicle on a test course on a dry road surface, and evaluated the steering stability during turning by feeling. The results are shown by an index with Comparative Example 1 being 100. The larger the numerical value, the more excellent the steering stability, which is favorable.

The results are shown in the table below.

**[Table 1]**

| | Example 1 | Comparative Example 1 |
|---|---|---|
| Wet grip performance during turning (index) | 104 | 100 |
| Steering stability during turning (index) | 108 | 100 |

As shown in the above table, it was confirmed that the tire of Example 1 obtained by arranging a central rubber and a both-side rubber having a relatively low modulus on a tread portion under predetermined conditions and arranging a first groove, a second groove, and a third groove under predetermined conditions was able to achieve both steering stability during turning and wet grip performance during turning.

### DESCRIPTION OF SYMBOLS

- 1: Carcass ply
- 2: Belt layer
- 3: Bead core
- 10: Tire
- 11: Tread portion
- 11C: Central rubber
- 11S: Both-side rubber
- 12: Sidewall portion
- 13: Bead portion
- 21: First groove
- 21A: Long groove portion of first groove
- 21B: Short groove portion of first groove
- 22: Second groove
- 22i: Inner side end in tire width direction of second groove
- 22o: Outer side end in tire width direction of second groove
- 22A: Outer side groove portion of second groove
- 22B: Inner side groove portion of second groove
- 23: Third groove
- 23i: Inner side end in tire width direction of third groove
- 31, 32: Shallow groove
- c1, c2: Bent portion

## Claims

1. A motorcycle tire (10) comprising a directional pattern in which a rotation direction when mounted on a vehicle is specified on a tire grounding portion, wherein
a tread portion (11) forming the tire grounding portion is composed of a central rubber (11C) arranged across a tire equator (CL) and a both-side rubber (11S) arranged outside the central rubber (11C) in a tire width direction and having a lower 300% modulus at 100°C than the central rubber (11C), and a boundary between the central rubber (11C) and the both-side rubber (11S) is in a range of from 1/2 to 3/4 of a half width of a peripheral length from the tire equator (CL),
on the tire grounding portion, a first groove (21) that comprises a bent portion (c1) and extends across the tire equator (CL), and whose both ends in the tire width direction are open to tread ends (TE), a second groove (22) that comprises a bent portion (c2) and whose both ends (22i, 22o) in the tire width direction terminated in one side surface in the tire width direction, and a third groove (23) whose outer side end in the tire width direction opens to the tread end (TE) and whose inner side end (23i) in the tire width direction terminates on one side surface in the tire width direction are sequentially provided in a direction opposite to a tire rotation direction,
the first groove (21) extends in the tire rotation direction in an inclined manner so as to be substantially line-symmetric in the tire width direction about the bent portion (c1), and the bent portion (c1) of the first groove (21) is in a range of from 1/8 to 3/8 of the half width of the peripheral length from the tire equator (CL),
the bent portion (c2) of the second groove (22) is in a range of from 1/4 to 1/2 of the half width of the peripheral length from the tire equator (CL), the inner side end (22i) in the tire width direction of the second groove (22) is in a range of from 1/16 to 3/16 of the half width of the peripheral length from the tire equator (CL), and the outer side end (22o) in the tire width direction of the second groove (22) is in a range of from 5/8 to 7/8 of the half width of the peripheral length from the tire equator (CL),
the inner side end (23i) in the tire width direction of the third groove (23) is in a range of from 1/2 to 5/8 of the half width of the peripheral length from the tire equator (CL),
when two groove portions (21A, 21B) extending in an inclined manner so as to be line-symmetric in the tire width direction of the first groove (21) are defined as a long groove portion (21A) extending across the tire equator (CL) and a short groove portion (21B) extending in one side surface in the tire width direction, and acute angles of angles formed by the long groove portion (21A) and the short groove portion (21B) with respect to the tire circumferential direction are defined as *θ1* and *θ2*, respectively, when, with the bent portion (c1) interposed, a groove portion (22A) on the outer side in the tire width direction of the second groove (22) is defined as an outer side groove portion (22A) and a groove portion (22B) on the inner side in the tire width direction of the second groove (22) is defined as an inner side groove portion (22B), and acute angles of angles formed by the outer side groove portion (22A) and the inner side groove portion (22B) with respect to the tire circumferential direction are defined as *θ3* and *θ4*, respectively, and when an acute angle of angles formed by the third groove (23) with respect to the tire circumferential direction is defined as *θ5*, *θ1* ≈ *θ2* ≈ *θ3* ≈ *θ5*, and *θ1 > θ4* are satisfied, and,
distances *a*, *b,* and c between the grooves in the tire circumferential direction measured between the open ends of the tire grounding portions of the first groove (21) and the second groove (22), the second groove (22) and the third groove (23), and the third groove (23) and the first groove (21) satisfy *a* ≈ *b* ≈ *c.*

2. The motorcycle tire (10) according to claim 1, wherein the angle *θ1* of the long groove portion (21A) of the first groove (21) is in a range of from 45° to 55°, and the angle *θ2* of the short groove portion (21B) of the first groove (21) is in a range of from 45° to 55°.

3. The motorcycle tire (10) according to claim 1 or 2, wherein the angle *θ3* of the outer side groove portion (22A) of the second groove (22) is in a range of from 45° to 55°, and the angle *θ4* of the inner side groove portion (22B) of the second groove (22) is in a range of from 15° to 25°.

4. The motorcycle tire (10) according to any one of claims 1 to 3, wherein the angle *θ5* of the third groove (23) is in a range of from 45° to 55°.

5. The motorcycle tire (10) according to any one of claims 1 to 4, wherein a shallow groove (31) is provided which is composed of a portion extending from the inner side end (23i) in the tire width direction of the third groove (23) on the extension of the third groove (23), a portion extending in parallel with the third groove (23) on the side opposite to the tire rotation direction of the third groove (23), and a portion that connects these two portions, and is provided in such a manner to surround the third groove (23).

## Patentansprüche

1. Motorradreifen (10), der ein Richtungsmuster umfasst, in dem eine Drehrichtung, wenn er an einem Fahrzeug montiert ist, auf einem Reifen-Bodenberührungsabschnitt angegeben ist, wobei
ein Laufflächenabschnitt (11), der den Reifen-Bodenberührungsabschnitt bildet, aus einem mittigen Gummi (11C), der über einen Reifenäquator (CL) angeordnet ist, und einem beidseitigen Gummi (11S), der außerhalb des mittigen Gummis (11C) in einer Reifenbreitenrichtung angeordnet ist und einen niedrigeren 300%-Modul bei 100 °C aufweist als der mittige Gummi (11C), besteht und sich eine Grenze zwischen dem mittigen Gummi (11C) und dem beidseitigen Gummi (11S) in einem Bereich von 1/2 bis 3/4 einer halben Breite einer Umfangslänge von dem Reifenäquator (CL) befindet,
auf dem Reifen-Bodenberührungsabschnitt eine erste Rille (21), die einen gebogenen Abschnitt (c1) umfasst und sich über den Reifenäquator (CL) erstreckt und deren beide Enden in der Reifenbreitenrichtung zu Laufflächenenden (TE) offen sind, eine zweite Rille (22), die einen gebogenen Abschnitt (c2) umfasst und deren beide Enden (22i, 22o) in der Reifenbreitenrichtung in einer Seitenfläche in der Reifenbreitenrichtung beendet sind, und eine dritte Rille (23), deren Außenseitenende in der Reifenbreitenrichtung sich zu dem Laufflächenende (TE) öffnet und deren Innenseitenende (23i) in der Reifenbreitenrichtung auf einer Seitenfläche in der Reifenbreitenrichtung endet, nacheinander in einer Richtung, entgegengesetzt zu einer Reifendrehrichtung, bereitgestellt werden,
sich die erste Rille (21) in der Reifendrehrichtung auf eine geneigte Weise so erstreckt, dass sie im Wesentlichen in der Reifenbreitenrichtung um den gebogenen Abschnitt (c1) achsensymmetrisch ist, und sich der gebogene Abschnitt (c1) der ersten Rille (21) in einem Bereich von 1/8 bis 3/8 der halben Breite der Umfangslänge von dem Reifenäquator (CL) befindet,
sich der gebogene Abschnitt (c2) der zweiten Rille (22) in einem Bereich von 1/4 bis 1/2 der halben Breite der Umfangslänge von dem Reifenäquator (CL) befindet, sich das Innenseitenende (22i) in der Reifenbreitenrichtung der zweiten Rille (22) in einem Bereich von 1/16 bis 3/16 der halben Breite der Umfangslänge von dem Reifenäquator (CL) befindet und sich das Außenseitenende (22o) in der Reifenbreitenrichtung der zweiten Rille (22) in einem Bereich von 5/8 bis 7/8 der halben Breite der Umfangslänge von dem Reifenäquator (CL) befindet,
sich das Innenseitenende (23i) in der Reifenbreitenrichtung der dritten Rille (23) in einem Bereich von 1/2 bis 5/8 der halben Breite der Umfangslänge von dem Reifenäquator (CL) befindet,
wenn zwei Rillenabschnitte (21A, 21B), die sich auf eine geneigte Weise so erstrecken, dass sie in der Reifenbreitenrichtung der ersten Rille (21) achsensymmetrisch sind, als ein langer Rillenabschnitt (21A), der sich über den Reifenäquator (CL) erstreckt, und ein kurzer Rillenabschnitt (21B), der sich in einer Seitenfläche in der Reifenbreitenrichtung erstreckt, definiert sind, und spitze Winkel von Winkeln, die durch den langen Rillenabschnitt (21A) und den kurzen Rillenabschnitt (21B) in Bezug auf die Reifenumfangsrichtung gebildet werden, jeweils als θ1 beziehungsweise θ2 definiert sind, wenn, mit dem eingefügten gebogenen Abschnitt (c1), ein Rillenabschnitt (22A) auf der äußeren Seite in der Reifenbreitenrichtung der zweiten Rille (22) als ein Außenseiten-Rillenabschnitt (22A) definiert ist und ein Rillenabschnitt (22B) auf der inneren Seite in der Reifenbreitenrichtung der zweiten Rille (22) als ein Innenseiten-Rillenabschnitt (22B) definiert ist und spitze Winkel von Winkeln, die durch den Außenseiten-Rillenabschnitt (22A) und den Innenseiten-Rillenabschnitt (22B) in Bezug auf die Reifenumfangsrichtung gebildet werden, jeweils als θ3 beziehungsweise θ4 definiert sind und wenn ein spitzer Winkel von Winkeln, die durch die dritte Rille (23) in Bezug auf die Reifenumfangsrichtung gebildet werden, als θ5 definiert ist, *θ1* ≈ *θ2* ≈ *θ3* ≈ *θ5* und *θ1 > θ4* erfüllt sind und
Abstände *a, b und* c zwischen den Rillen in der Reifenumfangsrichtung, gemessen zwischen den offenen Enden der Reifen-Bodenberührungsabschnitte der ersten Rille (21) und der zweiten Rille (22), der zweiten Rille (22) und der dritten Rille (23) und der dritten Rille (23) und der ersten Rille (21) *a ≈ b* ≈ c erfüllen.

2. Motorradreifen (10) nach Anspruch 1, wobei der Winkel *θ1* des langen Rillenabschnitts (21A) der ersten Rille (21) in einem Bereich von 45° bis 55° liegt und der Winkel *θ2* des kurzen Rillenabschnitts (21B) der ersten Rille (21) in einem Bereich von 45° bis 55° liegt.

3. Motorradreifen (10) nach Anspruch 1 oder 2, wobei der Winkel *θ3* des Außenseiten-Rillenabschnitts (22A) der zweiten Rille (22) in einem Bereich von 45° bis 55° liegt und der Winkel *θ4* des Innenseiten-Rillenabschnitts (22B) der zweiten Rille (22) in einem Bereich von 15° bis 25° liegt.

4. Motorradreifen (10) nach einem der Ansprüche 1 bis 3, wobei der Winkel *θ5* der dritten Rille (23) in einem Bereich von 45° bis 55° liegt.

5. Motorradreifen (10) nach einem der Ansprüche 1 bis 4, wobei eine flache Rille (31) bereitgestellt wird, die aus einem Abschnitt, der sich von dem Innenseitenende (23i) in der Reifenbreitenrichtung der dritten Rille (23) auf der Verlängerung der dritten Rille (23) erstreckt, einem Abschnitt, der sich parallel mit der dritten Rille (23) auf der zu der Reifendrehrichtung entgegengesetzten Seite der dritten Rille (23) erstreckt, und einem Abschnitt, der diese zwei Abschnitte verbindet, besteht und auf eine solche Weise bereitgestellt wird, dass sie die dritte Rille (23) umgibt.

## Revendications

1. Bandage pneumatique pour motocycle (10), comprenant un motif directionnel dans lequel une direction de rotation, lorsqu'il est monté sur un véhicule, est spécifiée sur une partie de contact au sol du bandage pneumatique, dans lequel
une partie de bande de roulement (11) formant la partie de contact au sol du bandage pneumatique, est composée d'une gomme centrale (11C) agencée à travers un équateur du bandage pneumatique (CL) et d'une gomme bilatérale (11S) agencée à l'extérieur de la gomme centrale (11C), dans une direction de la largeur du bandage pneumatique, et ayant un module à 300 % à 100 °C inférieur à celui de la gomme centrale (11C), et une limite entre la gomme centrale (1 1C) et la gomme bilatérale (11S) est comprise dans un intervalle de 1/2 à 3/4 d'une demi-largeur d'une longueur périphérique à partir de l'équateur du bandage pneumatique (CL) ;
sur la partie de contact au sol du bandage pneumatique, une première rainure (21) qui comprend une partie fléchie (c1) et s'étend à travers l'équateur du bandage pneumatique (CL), et dont les deux extrémités, dans la direction de la largeur du bandage pneumatique, sont ouvertes vers les extrémités de la bande de roulement (TE), une deuxième rainure (22) qui comprend une partie fléchie (c2) et dont les deux extrémités (22i, 22o), dans la direction de la largeur du bandage pneumatique, se terminent dans une surface latérale dans la direction de la largeur du bandage pneumatique, et une troisième rainure (23) dont l'extrémité latérale externe, dans la direction de la largeur du bandage pneumatique, est ouverte vers l'extrémité de la bande de roulement (TE), et dont l'extrémité latérale interne (23i), dans la direction de la largeur du bandage pneumatique, se termine sur une surface latérale, dans la direction de la largeur du bandage pneumatique, sont fournies séquentiellement dans une direction opposée à une direction de rotation du bandage pneumatique ;
la première rainure (21) s'étend dans la direction de rotation du bandage pneumatique, d'une manière inclinée, de sorte à être sensiblement en symétrie axiale dans la direction de la largeur du bandage pneumatique par rapport à la partie fléchie (c1), et la partie fléchie (c1) de la première rainure (21) est comprise dans un intervalle de 1/8 à 3/8 de la demi-largeur de la longueur périphérique à partir de l'équateur du bandage pneumatique (CL) ;
la partie fléchie (c2) de la deuxième rainure (22) est comprise dans un intervalle de 1/4 à 1/2 de la demi-largeur de la longueur périphérique à partir de l'équateur du bandage pneumatique (CL), l'extrémité latérale interne (22i), dans la direction de la largeur du bandage pneumatique, de la deuxième rainure (22) est comprise dans un intervalle de 1/16 à 3/16 de la demi-largeur de la longueur périphérique à partir de l'équateur du bandage pneumatique (CL), et l'extrémité latérale externe (22o), dans la direction de la largeur du bandage pneumatique, de la deuxième rainure (22) est comprise dans un intervalle de 5/8 à 7/8 de la demi-largeur de la longueur périphérique à partir de l'équateur du bandage pneumatique (CL) ;
l'extrémité latérale interne (23i), dans la direction de la largeur du bandage pneumatique, de la troisième rainure (23) est comprise dans un intervalle de 1/2 à 5/8 de la demi-largeur de la longueur périphérique à partir de l'équateur du bandage pneumatique (CL) ;
lorsque deux parties de rainure (21A, 21B) s'étendant d'une manière inclinée, de sorte à être en symétrie axiale, dans la direction de la largeur du bandage pneumatique, par rapport à la première rainure (21), sont définies comme une partie de rainure longue (21A) s'étendant à travers l'équateur du bandage pneumatique (CL), et une partie de rainure courte (21B) s'étendant dans une surface latérale, dans la direction de la largeur du bandage pneumatique, et des angles aigus d'angles formés par la partie de rainure longue (21A) et la partie de rainure courte (21B) par rapport à la direction circonférentielle du bandage pneumatique, sont définis respectivement comme *θ1* et *θ2*, lorsque, la partie fléchie (c1) étant interposée, une partie de rainure (22A) sur le côté externe, dans la direction de la largeur du bandage pneumatique, de la deuxième rainure (22) est définie comme une partie de rainure latérale externe (22A) et une partie de rainure (22B) sur le côté interne, dans la direction de la largeur du bandage pneumatique, de la deuxième rainure (22) est définie comme une partie de rainure latérale interne (22B), et des angles aigus d'angles formés par la partie de rainure latérale externe (22A) et la partie de rainure latérale interne (22B) par rapport à la direction circonférentielle du bandage pneumatique, sont définis respectivement comme *θ3* et *θ4*, et lorsqu'un angle aigu d'angles formés par la troisième rainure (23) par rapport à la direction circonférentielle du bandage pneumatique est défini comme *θ5*, les relations de *θ1*≈*θ2*≈*θ3*≈*θ5*, et *θ1*>*θ4* sont satisfaites ; et
des distances *a, b* et c entre les rainures, dans la direction circonférentielle du bandage pneumatique, mesurées entre les extrémités ouvertes des parties de contact au sol du bandage pneumatique de la première rainure (21) et de la deuxième rainure (22), la deuxième rainure (22) et la troisième rainure (23) et la troisième rainure (23) et la première rainure (21) satisfont les relations de *a* ≈ *b* ≈ *c.*

2. Bandage pneumatique pour motocycle (10) selon la revendication 1, dans lequel l'angle *θ1*de la partie de rainure longue (21A) de la première rainure (21) est compris dans un intervalle allant de 45° à 55°, et l'angle *θ2* de la partie de rainure courte (21B) de la première rainure (21) est compris dans un intervalle allant de 45° à 55°.

3. Bandage pneumatique pour motocycle (10) selon la revendication 1 ou la revendication 2, dans lequel l'angle *θ3* de la partie de rainure latérale externe (22A) de la deuxième rainure (22) est compris dans un intervalle allant de 45° à 55°, et l'angle *θ4* de la partie de rainure latérale interne (22B) de la deuxième rainure (22) est compris dans un intervalle allant de 15° à 25°.

4. Bandage pneumatique pour motocycle (10) selon l'une quelconque des revendications 1 à 3, dans lequel l'angle *θ5* de la troisième rainure (23) est compris dans un intervalle allant de 45° à 55°.

5. Bandage pneumatique pour motocycle (10) selon l'une quelconque des revendications 1 à 4, dans lequel une rainure peu profonde (31) est fournie, qui est composée d'une partie s'étendant de l'extrémité latérale interne (23i), dans la direction
de la largeur du bandage pneumatique, de la troisième rainure (23) sur l'extension de la troisième rainure (23), d'une partie s'étendant en parallèle avec la troisième rainure (23) sur le côté opposé à la direction de rotation du bandage pneumatique, de la troisième rainure (23) et d'une partie qui connecte ces deux parties, et est fournie de sorte à entourer la troisième rainure (23).
